# EUROPÄISCHE PATENTANMELDUNG

(11) **EP 0 836 973 A2**
(43) Veröffentlichungstag der Anmeldung: **22.04.1998**
(21) Anmeldenummer: 97108681.4
(22) Anmeldetag: 30.05.1997
(51) Int. Cl.: B60S 5/06

(54) **Multiblock-Robot System zur Batterieversorgung von Elektrofahrzeugen**

(30) Priorität: 30.05.1996 DE 19621668
(71) Anmelder: Kochanneck, Uwe, D-44145 Dortmund (DE)
(72) Erfinder: Kochanneck, Uwe, D-44145 Dortmund (DE)

(57) **Zusammenfassung**

Bei einem Multiblock-Robot System sollen die Vorteile der flexiblen Multiachsen-Anwendung durch Multiblock-Normteile und Flanschaufsteckgehäuse (9') für eine neue, kostengünstige Logistik und zur Steigerung der Akzeptanz und Anzahl von Elektro-Fahrzeugen genutzt werden. Zur Lösung dieser Aufgabe ist gemäß der Erfindung vorgesehen, daß Anlagen zur Batterieversorgung (E-Stops) für Elektrofahrzeuge mit Steuersäulen, Näherungssensoren und Antenneneinheiten mit integrierten Fernsteuerungseinheiten gebildet werden und mit selbstoperierenden Säulen- und Versenkungs-Kopplungseinrichtungen, für die Ladestromversorgung von Elektrofahrzeugen ausgerüstet sind, daß die E-Stops selbstoperierende Batteriewechsler besitzen und die Elektrofahrzeuge mit selbstoperierenden, E-Stop kompatiblen Schwenkarmen und mehrachsigen Gelenkarmen für die Ankoppelung mit den E-Stops und mit horizontalen und vertikalen Batterieblocks für den selbstoperierenden Batterieaustausch mit den Batteriewechslern der E-Stops ausgerüstet sind, daß die Kopplungseinrichtungen und Elektrofahrzeuge mit zueinander kompatiblen Scheckkartenlesern, Antenneneinheiten mit integrierten Fernsteuerungseinheiten und mit integrierten Näherungssensoren ausgerüstet werden, daß die selbstoperierende Navigation der Fahrzeuge, die E-Stop Ankoppelung, die Kopplung der Fahrzeuge untereinander und der Batteriewechsel über E-Stop Benutzer-Scheckkarten mit Programm-Steuerungscode und codierter Zugangsberechtigung eingeleitet wird, die von den Scheckkartenlesern der Steuersäulen, der Säulen-Versenkungseinrichtungen und den Bordcomputern lesbar sind, dort Steuerungsimpulse für die selbstoperierende Nutzung der E-Stops auslösen und um den Betrag der E-Stop Nutzungskosten enwertet werden, daß die Bordcomputer der Elektro-Fahrzeuge Steuertasten und Bildschirmdialog für die E-Stop Nutzung führen und die Grobpositionierung und Feinpositionierung an den E-Stops überwachen und steuern, daß die E-Stops regional und überregional mit Multiblock-Energiestationen, mit dem öffentlichen Strom-Netz und mit dem öffentlichen Telefonnetz verbunden sind und die Bordcomputer der Elektrofahrzeuge mit Modems ausgerüstet sind und an den E-Stops über die Verbindung zum öffentlichen Telefonnetz Computerkommunikation und Bildschirmdialog mit Fremdcomputern durchführen und daß die E-Stops und Elektrofahrzeuge aus der Kombination von Multiblock-Normteilen (1) und Flanschaufsteckgehäusen (9') mit Drehflansch-Steckverbindungen (2,27) bestehen und zusammengesteckt sind.

## Beschreibung

Die Erfindung betrifft ein Multiblock-Robot System für die Logistik und Energieversorgung von Elektrofahrzeugen. Gemäß DE 40 30 119 C2 ist ein Multiblock-Robot System bekannt. Diese Anordnung erbringt den Vorteil, daß zielgerichtete Robot-Gesamtsysteme zu standardisierten, annähernd baugleichen Multiblock-Normteilen aufgelöst werden, die mit minimalem Aufwand in Entwicklung und Konstruktion erstellt werden können und mit wenigen Handgriffen von den Anwendern selbst für das ursprünglich angestrebte Wirkungsspektrum eingesetzt oder zu anderen Robot-Systemlösungen zusammengesteckt werden können. Ferner ist gemäß DE 41 41 241 A1 ein Multiblock-Robot System bekannt, das die Vorteile des flexiblen Multiachsen-Robot Systems in der Funktion und Anwendungsflexibilität und in der Anwendungsbreite noch erweitert und dabei gleichzeitig die Baumaße reduziert und außerdem die systemkompatible und funktionsfähige externe Anwendung ermöglicht. Außerdem ist gemäß DE 195 17 852 A1 ein Multiblock-Robot System bekannt, bei dem die Standardisierung und wirtschaftliche Nutzungsfähigkeit weiter gesteigert und gleichzeitig die Benutzerflexibilität zusätzlich erhöht wird und gemäß DE 196 15 943.1, die umweltschonende Energiegewinnung aus Sonnen- und Windkraft, die Energie-Speicherung und die Energie-Abgabe an Multiblock Roboter und Elektrofahrzeuge durch selbstoperierenden Batterietausch mit oberhalb der Fahrbahn angeordneten Säulen-Batteriewechslern gelöst wird. Weiterhin sind multiblock-systemfremde Energie-Tankstellen für Elektrofahrzeuge bekannt, bei denen mit Code-Schlüsseln und Scheckkarten, Steckdosen erreichbar sind und der Ladevorgang der Antriebsbatterien per gummiertem, flexiblem Steckerkabel eingeleitet wird, das vom Benutzer von Hand in die Steckdosen der Energie-Tankstellen eingesteckt wird.

Aufgabe der vorliegenden Erfindung ist es, durch die Einführung einer geringen Anzahl zusätzlicher Multiblock-Normteile, eine neue, kostengünstige Logistik und steigende Akzeptanz für die Nutzung von Elektro-Fahrzeugen zu erreichen und die Vorteile der flexiblen Multiachsen-Robot Systeme durch zusätzliche hohe Stückzahlen in diesem Anwendungsbereich, in der Standardisierung, wirtschaftlichen Herstellung, Funktionalität und Anwendungsbreite, noch zu erweitern.

Dies ist gemäß der Erfindung dadurch erreicht, daß E-Stops für Elektrofahrzeuge mit Steuersäulen, Näherungssensoren und Antenneneinheiten mit integrierten Fernsteuerungseinheiten gebildet werden und mit selbstoperierenden Säulen- und Versenkungs-Kopplungseinrichtungen, für die Ladestromversorgung von Elektrofahrzeugen ausgerüstet sind, daß die E-Stops selbstoperierende Batteriewechsler besitzen und die Elektrofahrzeuge mit selbstoperierenden, E-Stop kompatiblen Schwenkarmen und mehrachsigen Gelenkarmen für die Ankoppelung mit den E-Stops und mit horizontalen und vertikalen Batterieblocks für den selbstoperierenden Batterieaustausch mit den Batteriewechslern der E-Stops ausgerüstet sind, daß die Kopplungseinrichtungen und Elektrofahrzeuge mit zueinander kompatiblen Scheckkartenlesern, Antenneneinheiten mit integrierten Fernsteuerungseinheiten und mit integrierten Näherungssensoren ausgerüstet werden, daß die selbstoperierende Navigation der Fahrzeuge, die E-Stop Ankoppelung, die Kopplung der Fahrzeuge untereinander und der Batteriewechsel über E-Stop Benutzer-Scheckkarten mit Programm-Steuerungscode und codierter Zugangsberechtigung eingeleitet wird, die von den Scheckkartenlesern der Steuersäulen, der Säulen-Versenkungseinrichtungen und den Bordcomputern lesbar sind, dort Steuerungsimpulse für die selbstoperierende Nutzung der E-Stops auslösen und um den Betrag der E-Stop Nutzungskosten entwertet werden, daß die Bordcomputer der Elektro-Fahrzeuge Steuertasten und Bildschirmdialog für die E-Stop Nutzung führen und die Grobpositionierung und Feinpositionierung an den E-Stops überwachen und' steuern, daß die E-Stops regional und überregional mit Multiblock-Energiestationen, mit dem öffentlichen Strom-Netz und mit dem öffentlichen Telefonnetz verbunden sind und die Bordcomputer der Elektrofahrzeuge mit Modems ausgerüstet sind und an den E-Stops über die Verbindung zum öffentlichen Telefonnetz Computerkommunikation und Bildschirmdialog mit Fremdcomputern durchführen und daß die E-Stops und Elektrofahrzeuge aus der Kombination von Multiblock-Normteilen 1 und Flanschaufsteckgehäusen 9' mit Drehflansch-Steckverbindungen 2,27 bestehen und zusammengesteckt sind.

Hiermit ist gegenüber dem Stand der Technik erreicht, daß die Vielfalt, Funktion und wirtschaftliche Herstellung der Baugruppen der Multiblock-Robots und anderer selbstoperierender Multiblock-Multiachsen-Systeme durch weitere Erschließung dieses großen Anwendungsbereiches, noch gesteigert wird. Zusätzlich wird die Attraktivität für die Nutzung von Elektrofahrzeugen durch die schnelle Energieversorgung verbessert die sich flächendeckend, kostengünstig und kurzfristig, weitgehend ohne bauliche Landschaftsveränderungen, unter den Fahrbahnoberflächen einrichten läßt und die dem Betankungsvorgang von Verbrennungsfahrzeugen im Zeitablauf und in den Kosten nicht nachsteht. Außerdem wird die Möglichkeit eröffnet, die Fahrzeuge nicht nur jeweils dem individuellen Fahrer und Besitzer zugänglich zu machen, sondern Elektrofahrzeug-Pools zu bilden, mit E-Pool-Fahrzeugen die für eine Vielzahl von Fahrern über den Besitz einer Scheckkarte mit codierter Nutzungsberechtigung erreichbar und zeitlich ohne Einschränkung frei verfügbar sind, welches den Nutzungsgrad von Elektrofahrzeugen weiter steigert und einen Anreiz für Privatwagenbesitzer bedeutet, auf ein eigenes Fahrzeug zu verzichten und statt dessen eine kostengünstigere E-Pool Benutzerberechtigung über eine E-Pool-Scheckarte zu erwerben, welches insbesondere die Innenstädte von einer Vielzahl von wenig genutzten, jedoch Platz benötigenden Fahrzeugen entlastet.

Ausgestaltungen der Erfindung sind in den Unteransprüchen genannt.

Die Erfindung wird im folgenden anhand von Ausführungsbeispielen, mit Bezug auf die Zeichnung näher erläutert. In dieser zeigt:

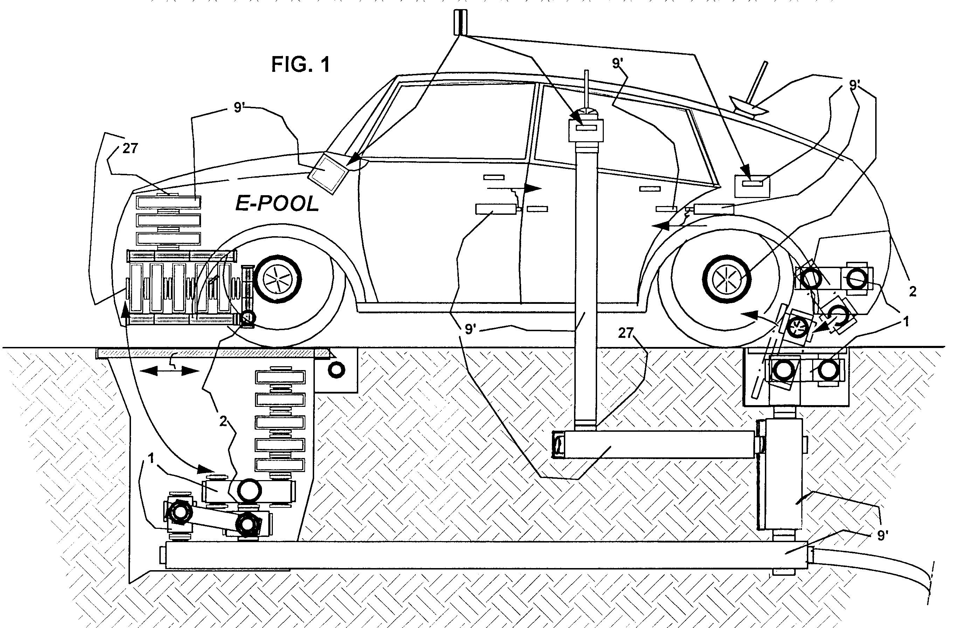

Fig. 1 die Seitenansicht eines Multiblock Robot Systems für die Logistik und Energieversorgung von Elektrofahrzeugen, das einen E-Stop mit Multiblock-Flanschaufsteckgehäusen die Scheckkartenleser und Antenneneinheiten integrieren darstellt, mit selbstoperierenden Multiblock Kopplungseinrichtungen und unter den Fahrzeugen wirksamen, selbstoperierenden Multiblock-Batteriewechslern und ein in E-Stop Position justiertes Multiblock-Elektrofahrzeug vor der Ankoppellung mit dem E-Stop, mit der hierzu kompatiblen Multiblock Vorrüstung, wobei die Ankoppelung über eine in die Fahrbahn eingelassene Versenkungs-Kopplungseinrichtung erfolgt und die Richtungspfeile, Dreh-, Verriegellungs- und Scheckkarten-Positionsrichtungen anzeigen,
Fig. 2 die Seitenansicht eines Multiblock Robot Systems gemäß der Fig. 1 mit durchgeführter Ankoppelung des Elektrofahrzeugs mit dem E-Stop und Durchführung eines Batteriewechsels,
Fig. 3 Die Vorderansicht eines E-Stops und die Versorgung eines multiblock-systemfremden Elektrofahrzeugs und eines Multiblock-Elektrofahrzeugs, wobei die Ankoppelung über eine seitlich zur Fahrtrichtung angeordnete Säulen-Kopplungseinrichtung erfolgt,

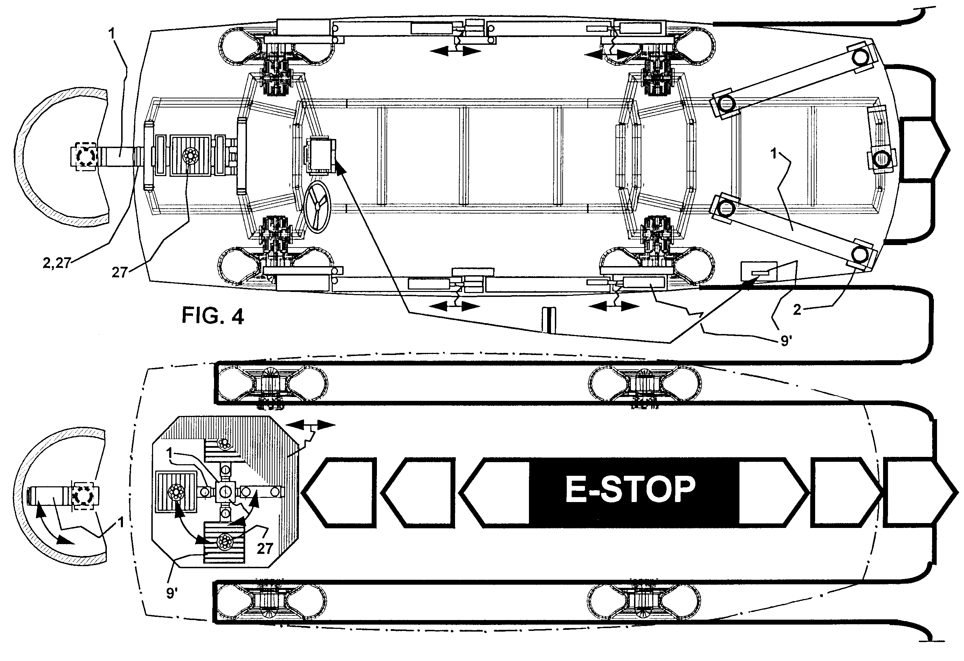

Fig. 4 Die Draufsicht eines E-Stops für gleichzeitig zwei Elektrofahrzeuge nebeneinander,

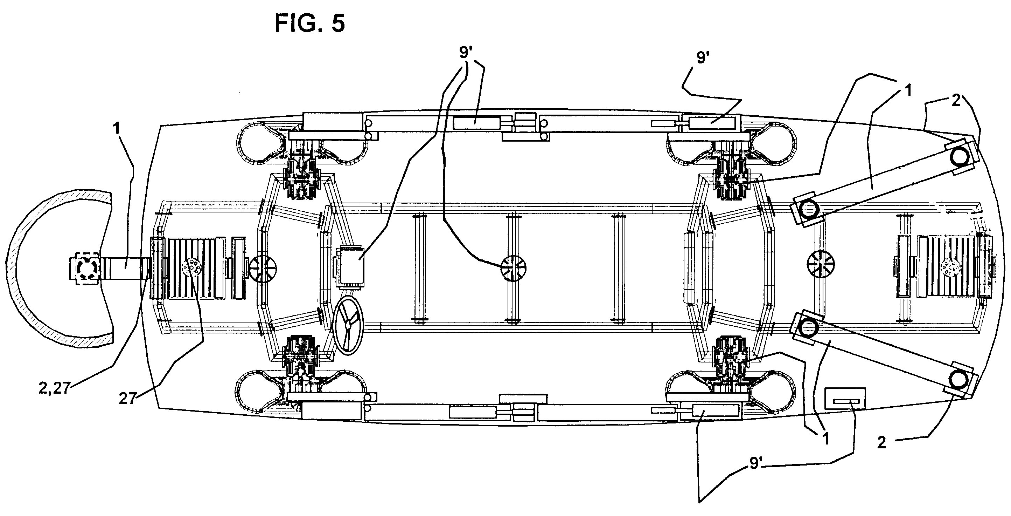

Fig. 5 Die Draufsicht eines E-Stops mit einer Säulen-Kopplungseinrichtung in Kopfposition und einem Multiblock-Elektrofahrzeug bei dem vorne und hinten Multiblock-Batterieeinheiten eingesetzt sind,

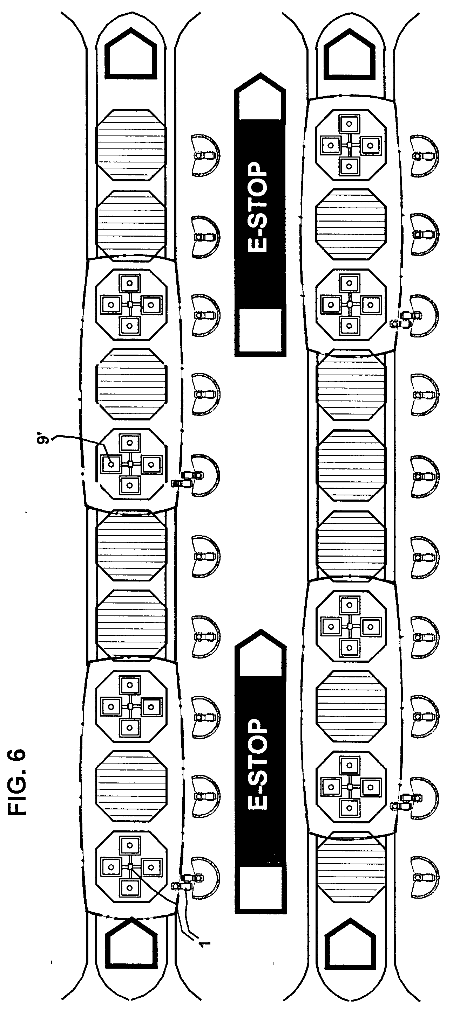

Fig. 6 Die Draufsicht eines E-Stops mit zweimal, jeweils zehn seitlich zur Fahrtrichtung angeordneten Säulen-Kopplungseinrichtungen hintereinander angeordnet,
Fig. 7 Die Draufsicht auf die Heckseite eines Multiblock-Elektrofahrzeugs und Kopplung mit dem E-Stop und einer vor Kopf angeordneten Säulen-Kopplungseinrichtung über einen Multiblock-Robot Gelenkarm und vor Kopf angeordneter Säulen-Kopplungseinrichtung,
Fig. 8 Die Draufsicht gemäß der Fig. 8 und seitlich zur Fahrtrichtung angeordneter Säulen-Kopplungseinrichtung,

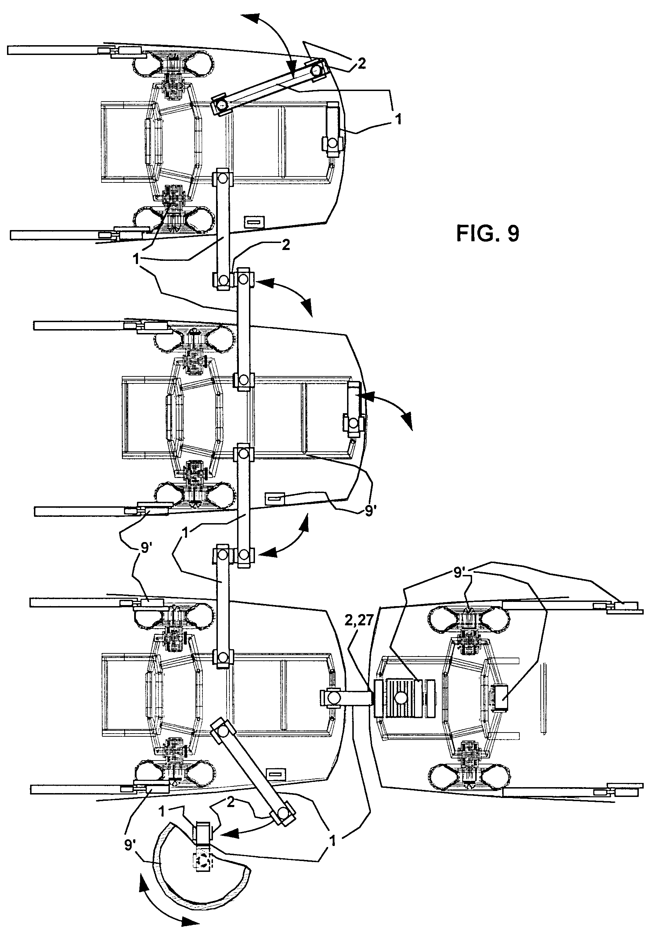

Fig. 9 Die Draufsicht auf vier Multiblock-Elektro-E-Poolfahrzeuge, mit Ankoppelung an eine seitlich angeordnete Säulen-Kopplungseinrichtung und Koppelung untereinander über Multiblock-Schwenkarme.

### Fig. 1, Fig. 2

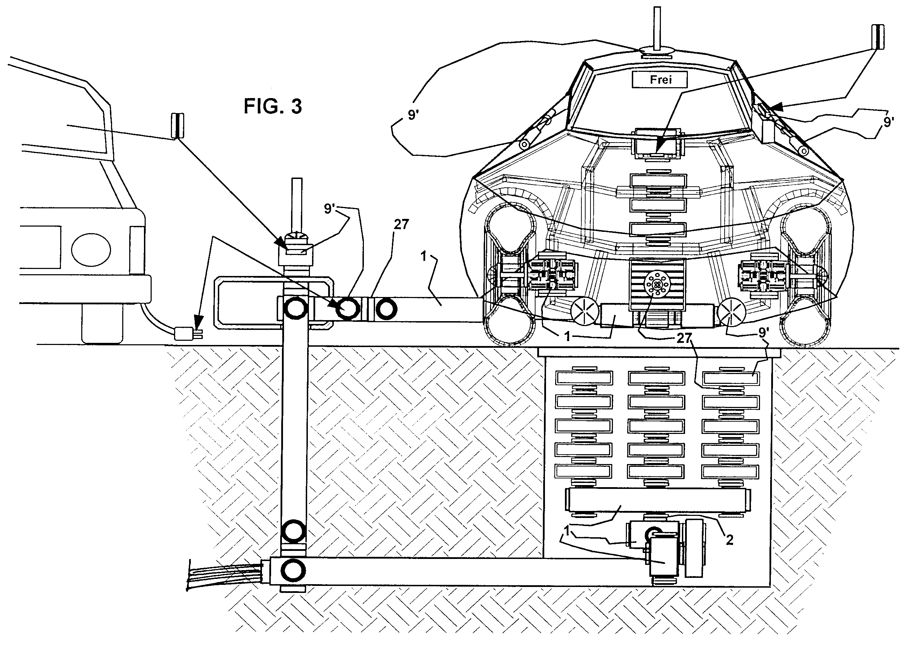

Eine Vielzahl von selbstoperierenden Multiblock-E-Stops die flächendeckend aufgestellt sind und von Elektrofahrzeugen, die mit E-Stop-kompatiblen, selbstoperierenden Kopplungseinheiten ausgerüstet sind, bilden die Basis für Das Multiblock-Robot System für die Logistik und Energieversorgung von Elektrofahrzeugen. Die Elektrofahrzeuge werden unterteilt in individual, personenbezogene Elektrofahrzeuge mit eindeutig definiertem Besitzer und E-Pool Elektrofahrzeuge, mit einer Vielzahl von unterschiedlichen Benutzerberechtigten. Im vorliegenden Ausführungsbeispiel besteht der E-Stop aus einer vertikalen, seitlich zur Fahrtrichtung aufgestellten Steuersäule mit einem Multiblock-Flanschaufsteckgehäuse 9' mit integriertem Scheckkartenleser und Antennen- und Fernsteuerungseinheit in Kopfposition. Mittig zur Fahrtrichtung ist für die Fahrzeug-Ankoppelung eine Versenkungs-Kopplungseinrichtung vorgesehen, mit zwei Multiblock-Normteilen 1, die einen Multiblock-Schwenkarm bilden der um 90° schwenkbar ist. Der Schwenkarm ist in die Fahrbahn eingelassen und erhält eine Abdeckbplatte, die auf die freiliegenden Flansche der Drehflanschsteckverbindungen 2 aufgesteckt ist und mit dem Schwenkarm um 90° lotrecht zur Fahrbahn einschwenkt und im abgekoppelten Zustand, mit der Fahrbahnoberfläche glatt abschließt und diese abdeckt. Die Versenkungs-Kopplungseinrichtung ist über Flanschaufsteckgehäuse 9' mit einem selbstoperierenden Batteriewechsler verbunden, der aus horizontal- und vertikal angeordneten Multiblock-Normteilen 1, einen Schwenkarm bildet und ein horizontal angeordnetes Multiblock-Normteil 1 mit zwei vertikal angeordneten Batterieblöcken aufnimmt, die ihrerseits jeweils aus fünf einzelnen Flanschaufsteckgehäusen 9' mit integrierten Batterieeinheiten bestehen, die vertikal übereinander angeordnet die Batterieblöcke bilden. Der Batteriewechsler ist durch eine Abdeckplatte, die durch ein Flanschaufsteckgehäuse 9' und ein Multiblock-Normteil 1 horizontal verschiebbar ist, ebenfalls wie die Versenkungs-Kopplungseinrichtung, zur Fahrbahnoberfläche hin abgeschlossen. Der Batteriewechsler und die Versenkungs-Kopplungseinrichtung befinden sind geradlinig zueinander und zentral zur Fahrtrichtung der Elektrofahrzeuge, unter der Fahrbahndecke angeordnet. Zur Benutzung dieses E-Stops erhalten Multiblock-Elektrofahrzeuge, Multiblock-Flanschaufsteckgehäuse 9' mit integriertem Bordcomputer und mit E-Stop-Benutzungs-Scheckkartenlesern. Außerdem erhalten diese Multiblock-Elektrofahrzeuge einen horizontal angeordneten Batterieblock, der auf ein vertikales Multiblock-Normteil 1 aufgesteckt ist, welches mit einem horizontalen, unter dem vertikal angeordneten Batterieblock geführten Multiblock-Normteil 1, einen Schwenkarm bildet und durch Aufsteckung auf eine Drehflansch-Steckverbindung 2, die sich in Höhe des Fahrzeugchassis befindet, eine Drehachse besitzt. Diese Multiblock-Batterieschwenkeinheit ist kompatibel zum Batteriewechsler des E-Stops unter der Fahrbahndecke. Über dem horizontal angeordneten Batterieblock ist ein Batterieblock vertikal angeordnet, der auf ein horizontal angeordnetes Flanschaufsteckgehäuse 9', aufgesteckt ist. Dieser Batterieblock ist für die Handentnahme der einzelnen übereinander angeordneten Flanschaufsteckgehäuse 9' mit integrierten Batterieeinheiten vorgesehen und dient als Pufferbatterieeinheit, unabhängig vom darunter angeordneten horizontalen Batterieblock. Außerdem besitzen die Fahrzeuge im Heck angeordnet, einen Multiblock-Schwenkarm mit Drehachse in Höhe des Fahrzeugchassis, der kompatibel zum Schwenkarm der Versenkungs-Kopplungseinrichtung des E-Stops unter der Fahrbahndecke ist. Der Fahrer des Elektrofahrzeugs hat die Option am E-Stop eine Batterieaufladung mit längerer Verweildauer durchzuführen, oder aber einen Batteriewechsel mit kurzer Verweildauer. Hierzu sind die Bordcomputer der Multiblock-Elektrofahrzeuge mit einer E-Stop-Steuertaste für die Auslösung der Steuersignale ausgerüstet. Wenn die Steuertaste vom Benutzer gedrückt wurde, erfolgt im Bildschirmdialog eine Navigationshilfe zur Grobpositionierung und Annäherung an den E-Stop durch den Fahrer selbst. In der Nähe des E-Stops und der Kopplungseinrichtung erfolgt die selbstätige Ankoppelung durch Signalaustausch drahtlos über Funksignale die zwischen der Fahrzeug-Antenneneinheit und der Antennen und Fernsteuereinheit der Steuersäule ausgetauscht werden. Die Positionierbefehle und die Berechnung und Angleichung der Näherungskoordinaten erfolgen selbstätig vom Bordcomputer durch Auswertung der Impulse die von den Flanschaufsteckgehäusen 9' mit integrierten Näherungssensoren, die auf Flanschaufsteckgehäuse 9' mit Drehflansch-Steckverbindungen 2,27 zentral in die Radnaben und unter dem Fahrzeug-Chassis, mittig, vorn und hinten aufgesteckt sind und dazu kompatiblen Näherungssensoren die auf Drehflansch-Steckverbindungen 2,27 der Versenkungs-Kopplungseinrichtung und der Batteriewechsler aufgesteckt sind. Im Bildschirmdialog kann der Fahrer dann entscheiden ob er die länger dauernde, aber kostengünstigere Batterieaufladung wählen will oder aber alternativ den sehr schnell durchführbaren, aber teureren Batteriewechsel. Zusätzlich werden Informationen über die Kosten und die Zeitdauer für die gewählten Operationen angezeigt. Nach Tastaturwahl für Batterieaufladung am Bordcomputer durch den Fahrzeugfahrer, erfolgt die selbstoperierende Ankoppelung an die E-Stop Versenkungs-Kopplungseinrichtung, indem die Drehflansch-Steckverbindungen 2 mit Steckereinheiten des Schwenkarmes an der Fahrzeugunterseite auf die dazu kompatiblen Steckerbuchseneinheiten des Schwenkarmes der Versenkungs-Kopplungseinrichtung zuschwenken und sich selbstätig zusammenstecken. Der Aufladevorgang für die Fahrzeugbatterien wird durchgeführt. Nach Tastaturwahl für Batteriewechsel erfolgt ebenfalls die Ankoppelung an den E-Stop über die Versenkungs-Kopplungseinrichtung und der Batteriewechsel wird unter Schonung der Pufferbatterien, über den Versorgungshauptstrom des E-Stops durchgeführt. Für den Batteriewechsel wird auf dem Batteriewechsler immer der Platz für eine Batterielinie freigehalten, so daß zuerst der leere Fahrzeugbatterieblock übernommen werden kann und dann gegen einen aufgeladenen Batterieblock ausgetauscht werden kann. Hierzu wird durch die Programmablaufsteuerung für Batteriewechsel die Abdeckklappe geöffnet. Der leere Batterieblock wird über die Multiblock-Normteile 1 des Fahrzeugs auf die freie Drehflansch-Steckverbindung 2 des Batteriewechslers geschwenkt. Hierzu wird das horizontal angeordnete Multiblock-Normteil 1 über den Schwenkarm des Batteriewechslers gegenläufig angehoben um den Batterieblock aufzunehmen. Die Magnetverriegelung zwischen Flanschaufsteckgehäuse 9' mit integrierter Batterieeinheit und der Drehflansch-Steckverbindung 2 am Fahrzeug wird gelöst und der Batterieblock, mit der dem gegenüberliegenden Flanschaufsteckgehäuse 9' mit integrierter Batterieeinheit, auf die Drehflansch-Steckverbindung 2 des Batteriewechslers aufgesteckt. Das horizontal angeordnete Multiblock-Normteil 1, nun mit dem leeren und geladenen Batterieblock belastet, wird abgesenkt und um 180° geschwenkt, so daß der geladene Batterieblock in Aufnahmeposition zu dem herabgeschwenkten Schwenkarm des Fahrzeugs steht, dann wieder angehoben und auf die Drehflansch-Steckverbindung des Fahrzeug-Schwenkarms aufgesteckt. Danach wird der Schwenkarm des Fahrzeugs wieder nach oben geschwenkt und rastet dort in die Drehflansch-Steckverbindung 2 des Fahrzeugchassis ein und die Magnetverriegelung wird geschlossen. Gleichzeitig schließt sich die Abdeckplatte des Batteriewechslers. Der Fahrer erhält akustisch und visuell auf dem Bildschirm seines Bordcomputers angezeigt, daß die Weiterfahrt möglich ist und die Ladeoperation oder der Batteriewechsel durchgeführt wurde. Der Batteriewechsler und die Versenkungs-Kopplungseinrichtung werden während der Ankoppelung und Durchführung der Operationen, von der Kontour des Fahrzeugs unfallsicher überdeckt. Der E-Stop bedingt keine großen baulichen Voraussetzungen und läßt sich in Fahrtrichtung an Fahrbahnrändern und an Parkstreifen einrichten. Die Einrichtung basiert auf der Koppelung und Aufsteckkombination von Flanschaufsteckgehäusen 9' und Multiblock Normteilen 1 mit jeweils veränderten Einbauteilen, so daß die Einrichtung schnell und flächendeckend durchgeführt werden kann. Die flächendeckende Einrichtung von E-Stops ist die Voraussetzung für den Einsatz von Multiblock-E-Pool-Fahrzeugen die einer Vielzahl von unterschiedlichen Benutzerberechtigten regional und überregional zur Verfügung stehen. Ein E-Pool-Fahrzeug erhält Bordcomputer mit integrierten Scheckkartenlesern und zusätzlich identische Scheckkartenleser, deren Scheckkartenschlitz an der Außenkontour eingesetzt ist und von Außen bedient wird, so daß der Zugriff zu den Fahrzeugen, die Nutzung der Fahrzeuge und der E-Stops, über E-Pool Benutzer-Scheckkarten mit Programm-Steuerungscodes erfolgt, die eine selbstoperierende Rundum-Türverriegelung öffnen und schließen, die in die Außenwand und Türen eingesetzt ist und aus Flanschaufsteckgehäusen 9' mit integrierten Magnetverriegelungen mit Drehflansch-Steckverbindungen 2,27 besteht. Die E-Pool Benutzer-Scheckkarten enthalten einen Basis-Programm-Steuerungscode der bei der Fahrzeugübernahme vom Bordcomputer durch einen zusätzlichen individuellen, personenbezogenen Benutzer-Programm-Steuercode ergänzt wird, der auf die Rundum-Türverriegelung wirksam wird und unmittelbar die Steuerungswirksamkeit des Basis-Programm-Steuercodes außer Kraft setzt und auf den neuen individuellen, personenbezogenen Benutzer-Programm-Steuercode einstellt. Der personenbezogene Benutzer-Programm-Steuercode ist nur temporär wirksam und wird bei Freigabe der E-Pool Fahrzeuge durch die jeweiligen Benutzer, durch den Bordcomputer wieder gelöscht und die Rundum-Türverriegelung wird selbstoperierend wieder auf die Steuerung durch den Basis-Programm-Steuercode aller E-Pool Benutzer Scheckkarten umprogrammiert, so daß die E-Pool Fahrzeuge wieder von anderen Benutzerberechtigten übernommen werden können. Die E-Stops und E-Pool-Fahrzeuge werden regional und überregional von E-Zentralen gewartet und von dort installierten E-Zentralcomputern steuerungslogistisch und administrativ betreut und überwacht. Hierzu ist jeder E-Stop mit den Multiblock-Flanschaufsteckgehäusen 9' und die Drehflansch-Steckverbindungen 27, die in den Boden verlegt sind, mit den Kommunikationsleitungen an die Telefonnetze angeschlossen und mit den Stromleitungen an das öffentliche Netz oder an Multiblock-Energiestationen (entsprechend der Energieabgabe wie unter DE 196 15 943.1 aufgeführt). Über die Kopplung zwischen E-Stop und E-Poolfahrzeug wird außer der Haupt- und Ladestromverbindung auch die Verbindung über die Kommunikationsleitungen der Multiblock Normteile 1 und der Flanschaufsteckgehäuse 9' geschlossen und somit eine Daten-Kommunikationsverbindung über die Telefonleitung vom Flanschaufsteckgehäuse 9' mit integriertem Bordcomputer zum E-Pool-Zentralcomputer hergestellt. Hierzu ist jeder Bordcomputer eines E-Pool-Fahrzeuges mit einem Modem-Interface ausgestattet, so daß von Fahrzeugen die E-Stops anfahren und dort angekoppelt sind, ein direkter Computer-Dialog und Datenaustausch zwischen dem Bordcomputer und dem E-Pool-Zentralcomputer erfolgt. Personen die eine E-Pool-Benutzerscheckkarte besitzen, können jederzeit freie, nicht benutzte E-Pool-Fahrzeuge belegen und beliebig für kurze Zeit und Fahrstrecken uneingeschränkt nutzen, oder über einen unbegrenzten längeren Zeitraum und für unbegrenzte Fahrstrecken regional und überregional. Die E-Pool-Fahrzeuge sind optisch als solche gekennzeichnet und die freie Verfügbarkeit wird an den Fahrzeugen durch 'Frei' angezeigt (Fig. 3). Außerdem erfahren Scheckkartenbenutzer telefonisch von der E-Pool-Zentrale, den nächst gelegenen Standort von freien E-Poolfahrzeugen. Die E-Pool-Fahrzeuge können überall abgestellt und die Benutzung beendet werden. Die Bordcomputer der E-Pool Fahrzeuge buchen jedoch selbstoperierend Preisreduzierungen für die E-Pool Benutzer, wenn die E-Pool-Fahrzeuge an E-Stops angekoppelt, abgestellt und die Benutzung dort beendet wird. Der Bordcomputer jedes E-Pool Fahrzeuges, das an E-Stops von E-Pool-Benutzern zurückgegeben und für die Benutzung durch andere E-Pool Scheckkartenbesitzer frei gegeben wird, übermittelt selbstoperierend an den E-Zentralcomputer die freie Verfügbarkeit des E-Pool Fahrzeuges mit den genauen E-Stop Standortdaten. E-Pool Fahrzeuge die von den E-Pool Benutzem nicht an E-Stops abgestellt werden, senden über die Flanschaufsteckgehäuse 9' mit integrierten Antennen- und Fernsteuerungseinheiten, in gleichmäßigen Zeitabständen Funksignale an Navigationssatelliten die an die E-Zentrale und den E-Zentralcomputer zur Standortermittlung übertragen, ausgewertet und für die logistische E-Pool Fahrzeugplanung genutzt werden. Weiterhin erhalten die Bordcomputer der E-Pool Fahrzeuge eine E-Stop-Informations-Tastatur, die bei Auslösung ein Navigationsprogramm startet, das über die eigenen Flanschaufsteckgehäuse 9' mit integrierten Antennen- und Fernsteuerungseinheiten, durch Kommunikation mit den Navigationssatelliten und mit den Flanschaufsteckgehäusen 9' mit integrierten Antennen- und Fernsteuerungseinheiten der Steuersäulen und der Säulen-Kopplungseinrichtungen an den E-Stops, Navigationshinweise zur Erreichung des nächst günstigen E-Stops errechnet. Dies unter Berücksichtigung der optimalen Werte für die kürzeste Entfernung vom eigenen aktuellen Standort zum E-Stop, für die aktuelle Belegung mit Elektrofahrzeugen, für die freien Plätze zur Ankoppelung, für die vorhandene Austauschkapazität an Batterieeinheiten und für die Kompatibilität der fahrzeugeigenen Batterieeinheiten und der fahrzeugeigenen Kopplungseinrichtung zu den Einrichtungen des E-Stops.
Freie E-Pool Fahrzeuge werden dadurch übernommen, daß die E-Pool-Scheckkarte in den Scheckkartenleser an der Außenkontour des Fahrzeuges eingesteckt wird. Der Bordcomputer überprüft die Zugangsberechtigung, sucht den Basis-Programm-Steuerungscode für das Öffnen der Türen zwecks Übernahme durch den neuen Benutzer und sendet Steuerungssignale an die Flanschaufsteckgehäuse 9' mit integrierter Türverriegelung, so daß alle Türen und der Kofferraum durch den neuen Benutzer geöffnet werden können. Der Benutzer muß nunmehr die Scheckkarte in den Scheckkartenleser des Bordcomputers einstecken. Hier werden die Scheckkartendaten des neuen Benutzers gespeichert und ein Bildschirmdialog ausgelöst. Die Benutzer werden aufgefordert das Fahrzeug nur zu übernehmen, wenn es offensichtlich in einem ordnungsgemäßen Zustand, unbeschädigt und nicht verschmutzt ist. Außerdem wird die mögliche Kilometerleistung angezeigt ohne einen E-Stop zur Batterieaufladung oder zum Batteriewechsel anfahren zu müssen und die Zeitdauer bis zum nächst fälligen generellen Wartungsintervall des Fahrzeugs. Dann wird der Basis-Programm-Steuerungscode der Scheckkarte durch den zusätzlichen individuellen, personenbezogenen Benutzer-Programm-Steuercode ergänzt, der temporär, bis zur Beendigung der E-Pool Fahrzeug-Benutzung auf die Rundum-Türverriegelung wirksam wird und verhindert, daß andere E-Pool Benutzer, das Fahrzeug öffnen und ihrerseits in Betrieb nehmen können. Vor jedem Start des Fahrzeugs muß die E-Pool Benutzer-Scheckkarte auch in den Scheckkartenleser des Bordcomputers eingesteckt werden und verbleibt dort, bis das Fahrzeug wieder verlassen wird. Die im Bordcomputer gespeicherten Scheckkarten-Daten des jeweiligen Benutzers, werden kontinuierlich im Laufe der Nutzung des E-Pool Fahrzeuges ergänzt durch die Speicherung der bisherigen Fahrzeug-Nutzungsdauer, die bisher gefahrenen Kilometer und die bisherigen E-Stop-Nutzungen für Batterieaufladung oder Batteriewechsel und werden bei jeder Ankoppelung an einen E-Stop, selbstätig an den E-Pool-Zentralcomputer übertragen und für Fahrzeug-Nutzungskostenberechnung, E-Stop-Nutzungskosten und Festlegung von Wartungs- und Reinigungsintervallen ausgewertet. E-Pool-Elektrofahrzeuge werden zum Schutz des Fahrzeugpools und der verschiedenen E-Pool Benutzer mit unterschiedlicher Fahrzeugführungserfahrung, mit selbstoperierenden Abstandssicherungsprogrammen und Ein-Ausparkprogrammen ausgerüstet, die durch Steuertasten an den Bordcomputern ausgelöst werden und kontinuierlich die Fahrzeug-Näherungsskoordination berechnen. Diese werden mittels der Flanschaufsteckgehäuse 9' mit integrierten Näherungssensoren, die vorne und hinten auf Drehflansch-Steckverbindungen 2,27 des Fahrzeugchassis aufgesteckt sind und über die zentral auf die Radnaben aufgesteckten Flanschaufsteckgehäusen 9' mit integrierten Näherungssensoren, ermittelt. Die Abstandssicherung zu Gegenständen und Fahrzeugen und zu anderen E-Pool Fahrzeugen wird dadurch realisiert, daß der Bordcomputer anhand der Näherungssensor-Daten den minimal erforderlichen Sicherheitsabstand in Abhängigkeit von der temporären Geschwindigkeit errechnet, selbstoperierend die Geschwindigkeit der E-Pool Fahrzeuge reduziert und die Umdrehungsgeschwindigkeiten an den Drehflansch-Steckverbindungen 2 der Fahrantriebseinheiten die aus Multiblock-Normteilen 1 zusammengesteckt sind verringert, bis die Minimal-Distanz erreicht ist und gleichzeitig dem Benutzer optisch und akkustisch die Geschwindigkeitsreduzierung und den erforderlichen Sicherheitsabstand anzeigt. Die Feinpositionierung für selbstoperierendes Einparken- und Ausparken erfolgt anhand der Näherungssensor-Daten und der vom Bordcomputer ermittelten Einparkkoordinaten unter Berechnung des minimal erforderlichen Sicherheitsabstandes zu Gegenständen und Fahrzeugen und durch Umsetzung der Näherungssensor-Daten in Steuerungsbefehle die über die Strom- und Kommunikationskanäle in den Multiblock-Normteilen 1 und Flanschaufsteckgehäusen 9' an die Fahrantriebseinheiten und Multiblock-Normteile 1 für die selbstätige Durchführung von Ein- und Ausparkvorgägen weitergeleitet werden. Multiblock-systemfremde Fahrzeuge werden für die Benutzung der Multiblock-E-Stops mit E-Stop kompatiblen Normteilen 1 und Flanschaufsteckgehäusen 9' nachgerüstet. Jedoch auch Fahrzeuge ohne Multiblock-kompatible Ausrüstungen, die mit flexiblen Steckerkabeln Ladestrom aufnehmen, können an den E-Stops versorgt werden. Hierzu wird bei Ankunft an der Steuersäule die Scheckkarte mit Benutzercode vom Fahrzeuginneren in den Scheckkartenleser der Steuersäule eingeführt und nach Lesung der Benutzerberechtigung wieder freigegeben. Gleichzeitig wird die Versenkungs-Kopplungseinrichtung hochgeschwenkt und die Drehflansch-Steckverbindungen 2 zur Verbindung und Einsteckung der Netzstecker freigegeben. Die Benutzer könnnen nun vom E-Stop Ladestrom entnehmen, und die Stecker in die Steckerbuchseneinheiten der Drehflansch-Steckverbindungen 2,27 der Versenkungs-Kopplungseinrichtung einführen, da jede Multiblock-Drehflansch-Steckverbindung 2,27 netzsteckerkompatibel ist. Für die Benutzung der E-Stops durch systemfremde Fahrzeuge werden spezifische Scheckkarten mit mehren codierten Nutzungswert-Einheiten verwendet die pro E-Stop Nutzung, durch den Scheckkartenleser um eine Nutzungseinheit entwertet werden, bis die ursprünglich codierten Werteinheiten verbraucht sind.

### Fig. 3

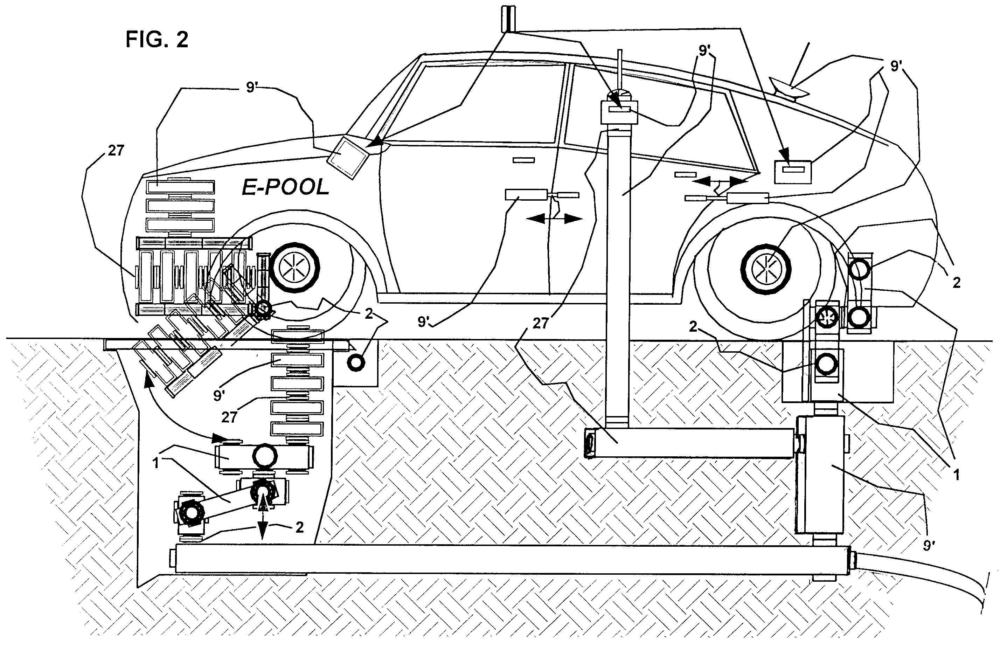

Der Batteriewechsler dieses E-Stops nimmt sternförmig maximal vier vertikale Batterieblöcke auf. Statt einer Versenkungs-Kopplungseinrichtung die in einer Linie zum Batteriewechsler in Fahrtrichtung eingerichtet ist, ist hier eine seitlich zur Fahrtrichtung angeordnete Säulen-Kopplungseinrichtung vorgesehen, die prinzipiell wie eine vertikale Steuersäule gemäß der Fig. 1,2 aufgebaut ist, jedoch im Niveaux eines Fahrzeugchassis, nur kurz über die Fahrbahn-, oder Parkstreifenoberfläche hinausragt. Außerdem ist hier oberhalb der Stellfäche ein horizontales Flanschaufsteckgehäuse 9' aufgesteckt, und ein Flanschaufsteckgehäuse 9', das als Abdeckhaube ausgebildet ist. Das E-Pool Fahrzeug ist für die Ankoppelung an den E-Stop ebenfalls mit horizontalen Flanschaufsteckgehäusen 9' ausgeführt, die seitlich unter dem Fahrzeugchassis einschwenkbar sind. Die Positionierung des Fahrzeugs am E-Stop zum Zweck der Ankoppelung an die Säulen-Kopplungseinrichtung erfolgt analog der Positionierung gemäß der Fig. 1,2, über die Flanschaufsteckgehäuse 9' mit integrierten Näherungssensoren zentral in den Radnaben und dem Näherungssensor in Kopfposition der Säulen-Kopplungseinrichtung und über den Steuersignalaustausch zwischen dem Flanschaufsteckgehäuse 9' mit Antennen und Fernsteuerungseinrichtung im E-Pool-Fahrzeugdach und an der Spitze der Säulen-Kopplungseinrichtung. E-Pool Fahrzeugbenutzer leiten auch die Ankoppelung an diesen E-Stop ein, ohne das Fahrzeug zu verlassen. Die Grobpositionierung wird durch den Benutzer durchgeführt, der über den Bordcomputer Navigationsinformationen zur Annäherung an den E-Stop erhält und die Feinpositionierung erfolgt durch das Multiblock-Navigationssystem selbstätig. Hierzu erhält der Benutzer über den Bordcomputer die Information, daß das Fahrzeug die Feinpositionierung im Autopilotverfahren an den E-Stop annähert und dann zur selbstätigen Ankoppelung freigibt. Die Säulen-Kopplungseinrichtung besitzt unter dem Näherungssensor einen Scheckkartenleser der identisch mit den Scheckkartenlesern der vertikalen Steuersäulen und der Fahrzeug-Scheckkartenleser ist. Multiblock-Elektrofahrzeuge die nicht dem E-Pool zugehören können ebenfalls an den E-Stop ankoppeln sofern sie die E-Stop kompatiblen Einrichtungen besitzen. Auch hier können Besitzer von multiblock-systemfremden Elektrofahrzeugen mit flexiblen Steckerkabeln, wie neben dem E-Pool-Fahrzeug dargestellt, am E-Stop Ladestrom entnehmen, und die Stecker in die Steckerbuchseneinheiten der Drehflansch-Steckverbindungen 2,27 der Säulen-Kopplungseinrichtung einführen. Die Einführung der Scheckkarte zur Überprüfung der Benutzerberechtigung und Entwertung um eine Aufladungs-Benutzereinheit erfolgt hier in den Scheckkartenleser der Säulen-Kopplungseinrichtung der über dem Flanschaufsteckgehäuse 9' mit integrierter Abdeckhaube aufgesteckt ist.

### Fig. 4

Die nebeneinander angeordneten E-Stops besitzen je eine Säulen-Kopplungseinrichtung die vor Kopf der Batteriewechsler angeordnet sind. Jedes Multiblock-Elektrofahrzeug besitzt eine Drehflansch-Steckverbindung die frontal und zentral zur Fahrzeugmitte angeordnet ist, so daß die Fahrzeuge durch Vorwärtsbewegung in die frontal angeordnete Säulen-Kopplungseinrichtung selbstätig hinein navigiert werden. Der Navigationsvorgang der Grobpositionierung durch die Fahrer für die Ankoppelung wird hier durch optische Markierungen auf der E-Stop Fahroberfläche unterstützt und durch bauliche Spurführungs-Einfahrhilfen unterstützt und beschleunigt. Das horizontale Flanschaufsteckgehäuse 9' der Säulen-Kopplungseinrichtung des vorderen, nicht belegten E-Stops ist unter das Flanschaufsteckgehäuse 9' mit integrierter Abdeckhaube berührungssicher eingeschwenkt. Das horizontale Flanschaufsteckgehäuse 9' der Säulen-Kopplungseinrichtung des hinteren, belegten E-Stops ist in Richtung zum abgestellten Fahrzeug eingeschwenkt und angekoppelt. Das abgestellte Fahrzeug besitzt hinten zwei Flanschaufsteckgehäuse 9' die zur Ankoppelung mit seitlich zur Fahrtrichtung positionierten Säulen-Kopplungseinrichtungen ausgeschwenkt werden und ein Flanschaufsteckgehäuse 9', hinten, mittig angeordnet, das zur Ankoppelung an Versenkungs-Kopplungseinrichtung genutzt wird.

### Fig. 5

Die Multiblock-Elektrofahrzeuge besitzen unterschiedliche Leistungsklassen und Ausrüstungen mit entsprechend unterschiedlicher Batteriebestückung und Anordnung. Das an den E-Stop frontal angekoppelte Fahrzeug ist vorne und hinten, zentral mit vertikal und horizontal übereinander angeordneten Batterieblöcken ausgerüstet und mit den Batterie-Drehflansch-Steckverbindungen 27 auf die Drehflansch-Steckverbindungen 27 der Flanschaufsteckgehäuse 9' des Fahrzeug-Chassis und auf die Drehflansch-Steckverbindungen 2 der Multiblock-Normteile 1 aufgesteckt. Alle Multiblock-Steuerungseinheiten, Antriebseinheiten, Verriegelungseinheiten, Schwenkarme, Abdeckeinheiten, Batterieeinheiten, Sensoren, Computereinheiten, Antennen- und Fernsteuereinheiten und die Gesamtstruktur des Fahrzeugs und des E-Stops, die aus zusammengesteckten Multiblock-Normteilen 1 mit Drehflansch-Steckverbindungen 2 und aus Flanschaufsteckgehäusen 9' mit den Drehflansch-Steckverbindungen 27 besteht, sind durch die zentral mitgeführten Strom- und Kommunikationskanäle in allen Punkten miteinander verbunden und durch die Haupt- und Ladestromverbindung erreichbar und werden durch die Anbindung an das E-Pool Navigations- und Steuerungssystem vom dort befindlichen E-Pool Zentralrechner erfaßt, gesteuert und ausgewertet. Für den beruflichen Einsatz werden Multiblock-Elektrofahrzeuge mit Hochleistungs-Bordcomputern ausgerüstet, die neben den reinen Navigationsdialogen, bei Ankopperlung an E-Stops, Datenübertragungen von Geschäftsunterlagen, Faxbetrieb und Multimediadialog über die Ankoppelung mit den Telefon-Standleitungsverbindungen erlauben und eine zusätzlich effiziente Nutzung der E-Stops und der Elektrofahrzeuge ermöglichen.

### Fig. 6

Dieser E-Stop ist für den fließenden Verkehr vorgesehen und führt nur schnelle Batteriewechsel ohne Batterieauflaudungen durch. In zwei nebeneinanderliegenden Bahnen befinden sich jeweils zehn Batteriewechsler. Die Fahrer mit dem Ziel des Batteriewechsels drücken an Ihrem Bordcomputer die Steuertaste für Batteriewechsel. Dieser löst Fernsteuerkontakt zum E-Stop und den einzelnen, dort seitlich zu jedem Batteriewechsler aufgestellten Säulen-Kopplungseinrichtungen aus, die schon bei Annäherung der Fahrzeuge an den E-Stop Navigationssignale für die Grobpositionierung erteilen und dem Fahrer mitteilen, welche Bahn anzufahren ist um den schnellsten Batteriewechsel zu ermöglichen. Sobald der Fahrer die E-Stop Markierungen erreicht hat und in die Bahnspur zum Batteriewechsel eingefahren ist, wird das Fahrzeug selbstoperierend über den Batteriewechslern feinpositioniert und an den E-Stop angekoppelt. Benutzer von E-Pool-Fahrzeugen mit ausreichend Batteriestrom in den Pufferbatterien, können im Dialog mit dem Bordcomputer den schnellst möglichen und kostengünstigsten Batteriewechsel wählen und mit eigener Stromversorgung, ohne Ankoppelung an den E-Stop über die Säulen-Kopplungseinrichtung, den Batteriewechsel durchführen. Die Batteriewechsler sind hintereinander in den Raster-Abständen so verteilt angelegt, daß bei Fahrzeugen mit Batterieblöcken vorne und hinten, beide Batterieblöcke gleichzeitig gewechselt werden, ohne daß die Fahrzeuge in der Bahn neu bewegt werden müssen. Statt der Säulen-Kopplungseinrichtung werden die E-Stop Bahnen auch mit Versenkungs-Kopplungseinrichtungen ausgerüstet, oder auch mit Kombinationen zwischen den beiden Kopplungstypen ausgeführt. Der Batteriewechselaufwand wird in jedem Fall selbstätig im eigenen Bordcomputer gespeichert und über die Telefon-Modern-Verbindungen vom Bordcomputer über die Strom und Kommunikationskanäle des E-Pool Fahrzeugs und des E-Stops, an die E-Pool-Zentrale und den dortigen E-Pool Zentralrechner zur Auswertung übermittelt.

### Fig. 7, Fig. 8

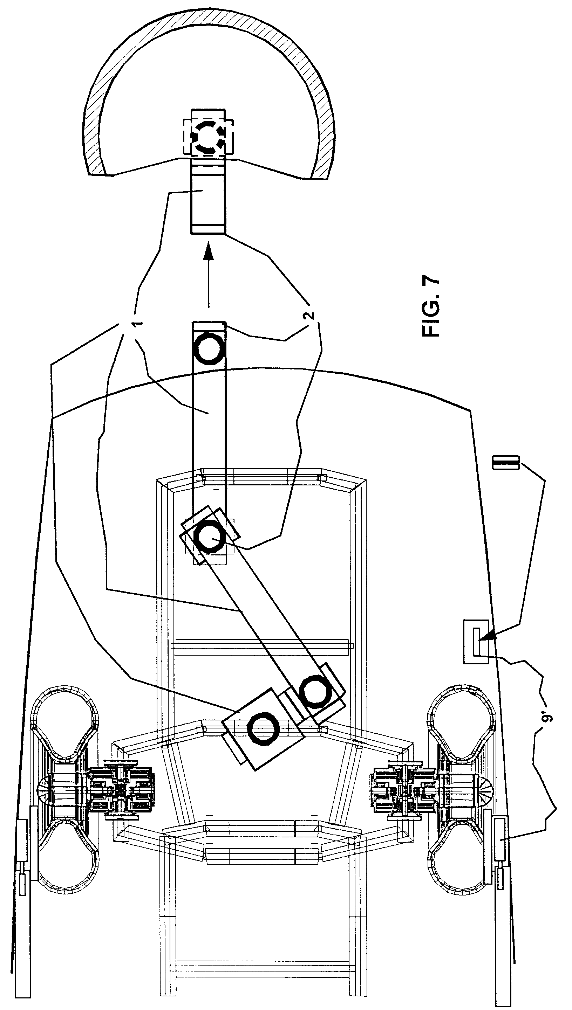

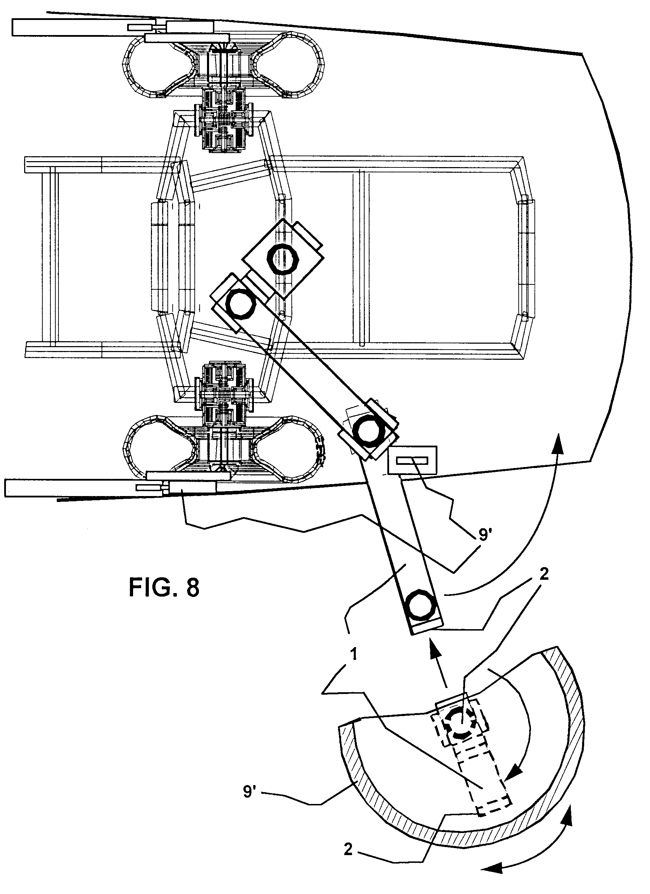

E-Stops besitzen in der einfachsten Ausstattung lediglich eine Säulen-Kopplungseinrichtung für Batterie-Aufladeoperationen. Die Elektrofahrzeuge benötigen für die selbstoperierende Ankoppelung an diesen E-Stop keine kompatiblen Schwenkarme, sondern werden mit frontal oder rückseitig aufsitzenden Drehflansch-Steckverbindungen 2,27 ausgerüstet und werden lediglich durch Fahrbewegungen und Navigation des Fahrzeuges in Richtung der Säulen-Kopplungseinrichtung bis zum sicheren Aufsteck- und Ankoppelungspunkt zwischen den Drehflansch-Steckverbindungen 2,27 der Fahrzeuge und der Säulen-Kopplungseinrichtung, an die Säulen-Kopplungseinrichtung angekoppelt. Die Elektrofahrzeuge werden außerdem für universelle Ankopplungsmöglichkeiten an E-Stops mit Säulen- und Versenkungs-Kopplungseinrichtungen aus beliebigen Anfahrpositionen heraus, mit vertikal und horizontal angeordneten Multiblock-Normteilen 1 und Flanschaufsteckgehäusen 9' ausgerüstet, die unter den Fahrzeugen in Richtung der Säulen- oder auch der Versenkungs-Kopplungseinrichtungen zur Ankoppelung einschwenken. Zusätzlich werden mehrachsige Gelenkarme eingesetzt, die korrigierende Fahrzeugbewegungen zur Feinpositionierung erübrigen und schnelle Ankoppelungen aus beliebigen Positionen zu frontal, seitlich und auch versenkt angeordneten E-Stop-Kopplungseinrichtungen durchführen. Im vorliegenden Ausführungsfall der Fig. 7 führt ein mehrachsiger Multiblock-Gelenkarm die selbstätige Ankoppelung mit der rückseitig angeordneten Säulen-Kopplungseinrichtung durch und gemäß der Fig. 8 mit der seitlich befindlichen Säulen-Kopplungseinrichtung.

### Fig. 9

Vier freie E-Pool Fahrzeuge sind an einen E-Stop über eine Säulen-Kopplungseinrichtung angekoppelt. Die einzelnen Fahrzeuge sind hier durch die eigenen Schwenkarme miteinander verbunden und nur das erste Fahrzeug an der Säulen-Kopplungseinrichtung führt mit dem Flanschaufsteckgehäuse 9' und der Drehflansch-Steckverbindung 2 in Pfeilrichtung die Ankoppelung durch. Die Strom- und Kommunikationsverbindung wird über die gekoppelten Seitenschwenkarme und die frontale Ankoppelung des Fahrzeuges in der zweiten Reihe rechts, vom E-Stop zu allen Fahrzeugen hergestellt und die Batterieaufladung kann für alle Fahrzeuge gleichzeitig über nur eine Kopplungseinrichtung durchgeführt werden und auch der Batteriewechsel, sofern am E-Stop Batteriewechsler vorgesehen sind. Die Fahrzeuge werden von der äußeren Stellposition nach innen bis zur ersten Stellposition an der Säulen-Kopplungseinrichtung von E-Pool Benutzern übernommen, oder es werden von innen nach außen zusätzliche Fahrzeuge angekoppelt. Hierbei werden über die Bordcomputer Fernsteuersignale an die Antennen- und Fernsteuereinheiten gesandt und die Steuerungsimpulse für die selbstoperierende Feinpositionierung zur Ankoppelung mit den abgestellten Fahrzeugen übermittelt und die Ankoppelung des ankommenden Fahrzeuges durch Auschwenken der Seitenschwenkarme, der rückwärtigen Schwenkarme oder der mehrachsigen Multiblock-Gelenkarme hergestellt. Wenn ein Fahrzeug von einem E-Pool Benutzer übernommen wird, erfolgt ein Zurückschwenken des übernommenen, eigenen Fahzeugschwenkarmes und des benachbarten Fahrzeug-Schwenkarmes, an den es angekoppelt war. Die Ankoppelung von mehreren Fahrzeugen an nur eine Kopplungseinrichtung erfolgt in gleicher Weise wenn eine Versenkungs-Kopplungseinrichtung am E-Stop vorgesehen ist. Die einzelnen Einrichtungskomponenten am E-Stop werden optional mit Steuersäulen mit integrierten Scheckkartenlesern und Fernsteuerungs-Antenneneinheiten, Versenkungs-Kopplungseinrichtungen, Säulen-Kopplungseinrichtungen, unter den Fahrbahnen angeordneten Batteriewechslern, Multiblock-Robot Energiestationen mit Batteriespendern und zugehörigen Batteriewechslern (gemäß DE 196 15 943.) und weiteren Multiblock-Normteilen 1 und Flanschaufsteckgehäusen 9' beliebig kombiniert. Ebenso werden die Multiblock-Elektrofahrzeuge mit horizontal angeordneten Puffer-Batterieblöcken und vertikal, schwenkbar angeordneten Batterieblöcken, horizontalen und vertikalen Schwenkarmen und mehrachsigen Gelenkarmen, Flanschaufsteckgehäusen 9' mit integrierten Computereinheiten und Scheckkartenlesern, Flanschaufsteckgehäusen 9' mit integrierten Verriegelungseinheiten und Scheckkartenlesern die an der Außenkontour den Einsteckschlitz besitzen und weiteren Multiblock-Normteilen 1 und Flanschaufsteckgehäusen 9', beliebig und kompatibel zu den E-Stop Ausrüstungen kombiniert. Das Batterie-Austauschprinzip und Auslagerung der Batterie-Aufladung an die E-Stops, durch Abgabe der Batterieblocks und sofortige Übernahme eines voll geladenen neuen Batterieblocks ohne Auflade-Wartezeiten, verhindert während der aktiven Verkehrsnutzung der Fahrzeuge Leistungsausfall wegen zu niedriger Batterieleistungen. Dieses aktive Batterie-Austausch-Prinzip wird ergänzt durch die passive Alternative der Batterieaufladungen während der Phase der ruhenden Verkehrsnutzung durch die Elektrofahrzeug-Benutzer, mittels Ankoppelung and die Säulen- und Versenkungs-Kopplungseinrichtungen. Beide Lösungen werden an den E-Stops, sich gegenseitig ergänzend, zusammengeführt. Die Multiblock-Elektrofahrzeug-Benutzer werden durch die Bordcomputer ständig über den Stand der Batterieladung informiert. Bei Ladungsabfall auf ein Minimum wird selbstoperierend auf die Puffer-Batterieblocks umgeschaltet und die Notwendigkeit des Batteriewechsels oder der Batterieaufladung angezeigt, mit Information über die noch erreichbare Kilometerleistung mit dem noch zur Verfügung stehenden Leistungsvermögen der Pufferbatterie und über den zum eigenen, aktuellen Standort nächstgelegen günstigsten E-Stop. Der Batteriewechsel wird gewählt, wenn die Weiterfahrt noch über einen größeren Zeitraum erforderlich ist. Die Batterieaufladung wird gewählt, wenn die Fahrziele mit dem Leistungsvermögen der Pufferbatterie noch erreichbar sind und während der Fahrzeug-Abstellphase die Batterieaufladung möglich ist. Insofern ist der Batteriewechsel keine Notlösung nur für den Fall des Batterieverschleißes oder technisch bedingten Ausfalls, sondern die aktive E-Fahrzeug Auftanklösung. Die Batteriewechsler der E-Stops übernehmen für die Fahrer die Aufladung und stellen aufgeladene Batterieblöcke zur Verfügung. Die E-Stop Zentrale ist über die Kommunikation mit den E-Stops und den Batteriewechslern ständig über den Ladezustand der vorhandenen Batterieblöcke informiert. Gleichzeitig wird ein Funktions- und Betriebssicherheits-Selbsttest der Batterieblöcke durchgeführt. Beschädigigte und in der Funktions- und Betriebssicherheit beeinträchtigte Batterieblöcke werden von den Batteriewechsler nicht mehr zum Batterieaustausch für E-Fahrzeug-Benutzer freigegeben, sondern von den E-Zentralcomputern geortet und zwecks wartungstechnischer Überholgung durch E-Stop-Wartungsfahrzeuge ausgetauscht und durch intakte, neue Batterieblöcke ersetzt. Der E-Stop-Benutzer muß sich deshalb nicht um den technischen und betriebsbereiten Zustand seiner Batterie-Einheiten sorgen. Die Kosten für die Gewährleistung der Übernahme von jederzeit technisch einwandfreien, betriebssicheren und aufgeladenen Batterieblöcken, werden über die E-Stop Benutzer-Scheckkarten, den Bordcomputern und den E-Zentralcomputern erfaßt.

## Patentansprüche

1. Multiblock-Robot System, dadurch gekennzeichnet, daß E-Stops für Elektrofahrzeuge mit Steuersäulen, Näherungssensoren und Antenneneinheiten mit integrierten Fernsteuerungseinheiten gebildet werden und mit selbstoperierenden Säulen- und Versenkungs-Kopplungseinrichtungen, für die Ladestromversorgung von Elektrofahrzeugen ausgerüstet sind, daß die E-Stops selbstoperierende Batteriewechsler besitzen und die Elektrofahrzeuge mit selbstoperierenden, E-Stop kompatiblen Schwenkarmen und mehrachsigen Gelenkarmen für die Ankoppelung mit den E-Stops und mit horizontalen und vertikalen Batterieblocks für den selbstoperierenden Batterieaustausch mit den Batteriewechslern der E-Stops ausgerüstet sind, daß die Kopplungseinrichtungen und Elektrofahrzeuge mit zueinander kompatiblen Scheckkartenlesern, Antenneneinheiten mit integrierten Fernsteuerungseinheiten und mit integrierten Näherungssensoren ausgerüstet werden, daß die selbstoperierende Navigation der Fahrzeuge, die E-Stop Ankoppelung, die Kopplung der Fahrzeuge untereinander und der Batteriewechsel über E-Stop Benutzer-Scheckkarten mit Programm-Steuerungscode und codierter Zugangsberechtigung eingeleitet wird, die von den Scheckkartenlesern der Steuersäulen, der Säulen-Versenkungseinrichtungen und den Bordcomputern lesbar sind, dort Steuerungsimpulse für die selbstoperierende Nutzung der E-Stops auslösen und um den Betrag der E-Stop Nutzungskosten entwertet werden, daß die Bordcomputer der Elektro-Fahrzeuge Steuertasten und Bildschirmdialog für die E-Stop Nutzung führen und die Grobpositionierung und Feinpositionierung an den E-Stops überwachen und steuern, daß die E-Stops regional und überregional mit Multiblock-Energiestationen, mit dem öffentlichen Strom-Netz und mit dem öffentlichen Telefonnetz verbunden sind und die Bordcomputer der Elektrofahrzeuge mit Modems ausgerüstet sind und an den E-Stops über die Verbindung zum öffentlichen Telefonnetz Computerkommunikation und Bildschirmdialog mit Fremdcomputern durchführen und daß die E-Stops und Elektrofahrzeuge aus der Kombination von Multiblock-Normteilen (1) und Flanschaufsteckgehäusen (9') mit Drehflansch-Steckverbindungen (2,27) bestehen und zusammengesteckt sind.

2. Multiblock-Robot System nach Anspruch 1, dadurch gekennzeichnet, daß individual Elektrofahrzeuge, Bordcomputer mit integrierten Scheckkartenlesern erhalten und zusätzlich identische Scheckkartenleser vorgesehen werden, deren Scheckkartenschlitz an der Außenkontour eingesetzt ist und von Außen bedient wird, daß der Zugriff zum Fahrzeug, die Nutzung der Fahrzeuge und der E-Stops über E-Stop Benutzer-Scheckkarten mit einem individuellen, personenbezogenen-Programm-Steuerungscode erfolgt und eine selbstoperierende Rundum-Türverriegelung öffnet und schließt, die in die Außenwand und Türen eingesetzt ist, daß E-Pool Elektrofahrzeuge gebildet werden die einer Vielzahl von unterschiedlichen Benutzern zur Verfügung gestellt werden und der Zugriff zu den Fahrzeugen, die Nutzung der Fahrzeuge und der E-Stops über E-Pool Benutzer-Scheckkarten mit Basis-Programm-Steuerungscode erfolgt der bei der Fahrzeugübernahme vom Bordcomputer durch einen zusätzlichen individuellen, personenbezogenen Benutzer-Programm-Steuercode ergänzt wird, der auf die Rundum-Türverriegelung wirksam wird und unmittelbar die Steuerungswirksamkeit des Basis-Programm-Steuercodes außer Kraft setzt und auf den neuen individuellen, personenbezogenen Benutzer-Programm-Steuercode einstellt und bei Freigabe der E-Pool Fahrzeuge, den individuellen, personenbezogenen Benutzer-Programm-Steuercode löscht und die Rundum-Türverriegelung wieder den Basis-Programm-Steuercode aller E-Pool Benutzer Scheckkarten akzeptiert und daß die Individual Elektrofahrzeuge und E-Pool Elektrofahrzeuge aus der Kombination von Multiblock-Normteilen (1) und Flanschaufsteckgehäusen (9') mit Drehflansch-Steckverbindungen (2,27) bestehen und zusammengesteckt sind.

3. Multiblock-Robot System nach einem der Ansprüche 1 oder 2, dadurch gekennzeichnet, daß regional und überregional E-Zentralen mit E-Zentralcomputern für die Überwachung und Steuerung der E-Stops und der E-Pool Elektrofahrzeuge eingerichtet sind und die Wartung und die Ausgaben von E-Stop und E-Pool Benutzerfahrzeugen durchführen, daß die E-Zentralcomputer mit den E-Stops und den Bordcomputern der dort versorgten und angekoppelten individual Elektrofahrzeuge und der E-Pool Fahrzeugen vernetzt sind und über die Telefonstandleitungen des öffentlichen Telefonnetzes, Navigations-, Buchungs- und Kontrolldialoge führen.

4. Multiblock-Robot System nach einem der Ansprüche 1 bis 3, dadurch gekennzeichnet, daß der Bordcomputer jedes E-Pool Fahrzeuges, daß an E-Stops von E-Pool-Benutzern frei gegeben wird, selbstoperierend an den E-Zentralcomputer die freie Verfügbarkeit für andere E-Pool Benutzer übermittelt, daß von E-Pool Benutzern nicht an E-Stops abgestellte E-Pool Fahrzeuge, über die Flanschaufsteckgehäuse (9') mit integrierten Antennen- und Fernsteuerungseinheiten, in gleichmäßigen Zeitabständen Funksignale gesendet werden die von Navigationssatelliten empfangen und zur Standortermittlung ausgewertet werden, daß die Standortdaten an die E-Zentralcomputer der E-Zentrale übermittelt werden und die beliebige Standortposition der E-Pool Fahrzeuge ermittelt und für die logistische E-Pool Fahrzeugplanung genutzt wird und daß die Bordcomputer eine E-Stop-Informations-Tastatur erhalten, die bei Auslösung ein Navigationsprogramm starten, das über die eigenen Flanschaufsteckgehäuse (9') mit integrierten Antennen- und Fernsteuerungseinheiten, in Kommunikation mit den Navigationssatelliten und den Flanschaufsteckgehäusen (9') mit integrierten Antennen- und Fernsteuerungseinheiten der Steuersäulen und der Säulen-Kopplungseinrichtungen an den E-Stops, Navigationshinweise zur Erreichung des nächst günstigen E-Stops errechnet unter Berücksichtigung der optimalen Werte für die kürzeste Entfernung vom eigenen aktuellen Standort zum E-Stop, die aktuelle Belegung mit Elektrofahrzeugen, die freien Plätze zur Ankoppelung und die vorhandene Austauschkapazität an Batterieeinheiten und die Kompatibilität der fahrzeugeigenen Kopplungseinrichtung, und der fahrzeugeigenen Batterieeinheiten zu den Einrichtungen des E-Stops.

5. Multiblock-Robot System nach einem der Ansprüche 1 bis 4, dadurch gekennzeichnet, daß die E-Pool-Elektrofahrzeuge durch Flanschaufsteckgehäuse (9') mit integrierten Näherungssensoren, die vorne und hinten auf Drehflansch-Steckverbindungen (2,27) des Fahrzeugchassis und zentral auf die Radnaben aufgesteckt sind, eine Abstandssicherung zu Gegenständen und Fahrzeugen und zu anderen E-Pool Fahrzeugen hergestellt wird und daß der Bordcomputer anhand der Näherungssensor-Daten den minimal erforderlichen Sicherheitsabstand in Abhängigkeit von der temporären Geschwindigkeit errechnet und selbstoperierend die Geschwindigkeit der E-Pool Fahrzeuge mit den Fahrantriebseinheiten und Multiblock-Normteilen (1) reduziert bis die Minimal-Distanz erreicht ist und gleichzeitig dem Benutzer optisch und akkustisch die Geschwindigkeitsreduzierung und den erforderlichen Sicherheitsabstand anzeigt und daß der Bordcomputer eine Einpark-Tastatur besitzt und die Feinpositionierung für automatisches Einparken selbstätig steuert und anhand der Näherungssensor-Daten die Einparkkoordinaten unter Berechnung des minimal erforderlichen Sicherheitsabstandes zu Gegenständen und Fahrzeugen ermittelt werden und über die Strom- und Kommunikationskanäle in den Multiblock-Normteilen (1) und Flanschaufsteckgehäusen (9') an die Fahrantriebseinheiten und Multiblock-Normteile (1) für die selbstätige Durchführung von Ein- und Ausparkvorgägen weiterleiten.
